# EUROPEAN PATENT APPLICATION

(11) **EP 4 318 219 A1**
(43) Date of publication of application: **07.02.2024**
(21) Application number: 22852216.5
(22) Date of filing: 02.08.2022
(51) Int. Cl.: G06F 8/76, G06F 8/73

(54) **MULTI-ADAPTER COMPATIBLE LIBRARY FILE MODULE, CALLING METHOD, CALLING SYSTEM, AND DEVICE**

(30) Priority: 02.08.2021 CN 202110878595
(71) Applicant: Shanghai Tosun Technology Ltd., Shanghai 201804 (CN)
(72) Inventor: LIU, Chu, Shanghai 201804 (CN); XIE, Yueyin, Shanghai 201804 (CN); MO, Mang, Shanghai 201804 (CN)
(74) Representative: Sun, Yanan
(86) International application number: PCT/CN2022/109809
(87) International publication number: WO 2023/011504

(57) **Abstract**

The present disclosure relates to the technical field of adapter compatibility, and specifically, to a library file module, calling method, calling system, and device for multi-adapter compatibility. The calling method for multi-adapter compatibility includes: building a library file module for each manufacturer; obtaining, by an application (APP), message information of a device by using the library file module; and disconnecting the device after obtaining the message information. This implements abstraction of an adapter in an upper-layer APP. The upper-layer APP exports a set of generic application programming interfaces (APIs), compiles a library file for an adapter of each manufacturer, and implements an API of the upper-layer APP by calling an API of the adapter of the manufacturer. The APP does not need to know any details of the adapter of the manufacturer, but only loads the library file to use a function of the adapter, so as to support adapters of all manufacturers on the market and support any new adapter of the manufacturers by adding a corresponding library file. This greatly improves development efficiency of the APP.

## Description

### TECHNICAL FIELD

The present disclosure relates to the technical field of adapter compatibility, and specifically, to a library file module, calling method, calling system, and device for multi-adapter compatibility.

### BACKGROUND

In automotive tool applications, it is often necessary to simultaneously or alternately use one or more types of devices of various existing manufacturers. Usually, an upper-layer application (APP) is developed to simultaneously support application programming interfaces (APIs) of manufacturers A, B, and C, and is enabled to communicate freely with hardware of these three manufacturers through configuration mapping. This design causes the following problems:

When this APP is designed, it is necessary to understand representations and calling methods of the APIs of the manufacturers A, B, and C, and include API calling algorithms of these three manufacturers in the APP, which increases a development difficulty and workload of the APP itself.

An architecture of the APP cannot support a function of dynamically adding devices of new manufacturers such as emerging manufacturers D and E, because APIs of the manufacturers D and E have distinct representations from those of the manufacturers A, B, and C. The architecture of the APP itself is not easy to expand and not flexible enough.

If the APP needs to support the devices of the new manufacturers such as the manufacturers D and E, it is necessary to modify implementation logic of the APP and introduce API calling algorithms of the manufacturers D and E into an existing framework. This will make changes to the APP, which increases a software workload in the change process, and possibly introduces a defect that may affect calling of an API of a supported manufacturer.

Therefore, to resolve the above technical problems, a new library file module, calling method, calling system, and device for multi-adapter compatibility need to be designed.

### SUMMARY

The present disclosure is intended to provide a library file module, calling method, calling system, and device for multi-adapter compatibility.

To resolve the above technical problem, the present disclosure provides a library file module for multi-adapter compatibility, including:
a serial number reading submodule, a channel quantity reading submodule, a channel type reading submodule, a channel baud rate reading submodule, a channel baud rate writing submodule, a connection submodule, a message sending submodule, a message receiving submodule, and a disconnection submodule.

Further, the serial number reading submodule is adapted to read an API of a device from a library file and return a serial number of the device to an APP;
the channel quantity reading submodule is adapted to read the API of the device from the library file and return a quantity of physical channels of the device to the APP;
the channel type reading submodule is adapted to read the API of the device from the library file and return a type of a specific channel of the device to the APP;
the channel baud rate reading submodule is adapted to read the API of the device from the library file and return a baud rate of the specific channel to the APP;
the channel baud rate writing submodule is adapted to call the API of the device from the library file and write a given baud rate of the APP into the device;
the connection submodule is adapted to call the API of the device from the library file to connect the APP and the device;
the message sending submodule is adapted to call the API of the device from the library file and write a given to-be-sent message of the APP into the device;
the message receiving submodule is adapted to call the API of the device from the library file and return messages read by the device from all channels to the APP; and
the disconnection submodule is adapted to call the API of the device from the library file to disconnect the APP from the device.

According to a second aspect, the present disclosure further provides a calling method for multi-adapter compatibility, including:
building a library file module for each manufacturer;
obtaining, by an APP, message information of a device by using the library file module; and
disconnecting the device after obtaining the message information.

Further, a method for building the library file module for each manufacturer includes:
the library file module includes: a serial number reading submodule, a channel quantity reading submodule, a channel type reading submodule, a channel baud rate reading submodule, a channel baud rate writing submodule, a connection submodule, a message sending submodule, a message receiving submodule, and a disconnection submodule, where
the serial number reading submodule is adapted to read an API of the device from a library file and return a serial number of the device to the APP;
the channel quantity reading submodule is adapted to read the API of the device from the library file and return a quantity of physical channels of the device to the APP;
the channel type reading submodule is adapted to read the API of the device from the library file and return a type of a specific channel of the device to the APP;
the channel baud rate reading submodule is adapted to read the API of the device from the library file and return a baud rate of the specific channel to the APP;
the channel baud rate writing submodule is adapted to call the API of the device from the library file and write a given baud rate of the APP into the device;
the connection submodule is adapted to call the API of the device from the library file to connect the APP and the device;
the message sending submodule is adapted to call the API of the device from the library file and write a given to-be-sent message of the APP into the device;
the message receiving submodule is adapted to call the API of the device from the library file and return messages read by the device from all channels to the APP; and
the disconnection submodule is adapted to call the API of the device from the library file to disconnect the APP from the device.

Further, a method used by the APP to obtain the message information of the device by using the library file module includes:
obtaining, by the APP, the message information of the device by using the library file module corresponding to the manufacturer, specifically,
sequentially implementing functions of the serial number reading submodule, the channel quantity reading submodule, the channel type reading submodule, the channel baud rate reading submodule, the channel baud rate writing submodule, the connection submodule, the message sending submodule, the message receiving submodule, and the disconnection submodule to obtain the message information.

Further, a method for disconnecting the device after obtaining the message information includes:
disconnecting the APP from the device by using the disconnection submodule after obtaining the message information.

According to a third aspect, the present disclosure further provides a calling system for multi-adapter compatibility, including:
a library file module configured to build a library file module for each manufacturer;
a message information obtaining module configured to obtain, by an APP, message information of a device by using the library file module; and
a disconnection module configured to disconnect the device after the message information is obtained.

According to a fourth aspect, the present disclosure further provides a multi-adapter compatibility device, including:
a control module, and a plurality of interface modules electrically connected to the control module, where
the interface modules are adapted to connect an adapter; and
the control module is adapted to receive, by using the adapter, message information sent by a device.

According to a fifth aspect, the present disclosure further provides a multi-adapter compatibility system, including:
a multi-adapter compatibility device and a host computer, where
the host computer is adapted to receive message information sent by the multi-adapter compatibility device and analyze the message information.

The present disclosure has following beneficial effects: According to the present disclosure, a library file module is built for each manufacturer; an APP obtains message information of a device by using the library file module; and the device is disconnected after the message information is obtained. This implements abstraction of an adapter in an upper-layer APP. The upper-layer APP exports a set of generic APIs, compiles a library file for an adapter of each manufacturer, and implements an API of the upper-layer APP by calling an API of the adapter of the manufacturer. The APP does not need to know any details of the adapter of the manufacturer, but only loads the library file to use a function of the adapter, so as to support adapters of all manufacturers on the market and support any new adapter of the manufacturers by adding a corresponding library file. This greatly improves development efficiency of the APP.

Other features and advantages of the present disclosure will be described in the following description, and some of these will become apparent from the description or be understood by implementing the present disclosure. The objectives and other advantages of the present disclosure can be implemented or obtained by structures specifically indicated in the description and accompanying drawings.

In order to make the above purposes, features, and advantages of the present disclosure clearer and more understandable, the present disclosure is described in detail below using preferred embodiments with reference to the accompanying drawings.

### BRIEF DESCRIPTION OF THE DRAWINGS

To describe the technical solutions in the specific implementations of the present disclosure or the prior art more clearly, the accompanying drawings required for describing the specific implementations or the prior art are briefly described below. Apparently, the accompanying drawings in the following description show merely some implementations of the present disclosure, and a person of ordinary skill in the art may still derive other accompanying drawings from these accompanying drawings without creative efforts.
FIG. 1 is a flowchart of a calling method for multi-adapter compatibility according to the present disclosure;
FIG. 2 is a schematic diagram of a calling method for multi-adapter compatibility according to the present disclosure; and
FIG. 3 is a functional block diagram of a calling system for multi-adapter compatibility according to the present disclosure.

### DETAILED DESCRIPTION OF THE EMBODIMENTS

In order to make the objectives, technical solutions, and advantages of the embodiments of the present disclosure clearer, the technical solutions in the present disclosure are described clearly and completely below with reference to the accompanying drawings. Apparently, the described embodiments are some rather than all of the embodiments of the present disclosure. All other embodiments obtained by a person of ordinary skill in the art based on the embodiments of the present disclosure without creative efforts shall fall within the protection scope of the present disclosure.

### Embodiment 1

Embodiment 1 provides a library file module for multi-adapter compatibility, which may include but is not limited to a serial number reading submodule, a channel quantity reading submodule, a channel type reading submodule, a channel baud rate reading submodule, a channel baud rate writing submodule, a connection submodule, a message sending submodule, a message receiving submodule, and a disconnection submodule. The library file module calls an API of an adapter of a manufacturer to implement an API of an upper-layer APP. The APP does not need to know any details of the adapter of the manufacturer, but only loads a library file to use a function of the adapter. The APP does not need to be modified after being developed, and can not only support adapters of all manufacturers on the market, but also support any new adapter of the manufacturers by adding a corresponding library file. This greatly improves development efficiency of the APP, reduces a workload, and reduces a possibility of an error.

In this embodiment, the APP requests a series of specific callback functions (submodules corresponding to functions) from one library file module each time the APP loads the library file module. These callback functions are called in real time during operation of the APP. Types and a quantity of the callback functions depend on functions of the APP. Functions and a quantity of the submodules in the library file module can be implemented differently for different manufacturers, and even for one manufacturer, library file modules with same functions but different implementations can be implemented by different developers. The serial number reading submodule is adapted to read an API of a device from a library file and return a serial number of the device to the APP. The channel quantity reading submodule is adapted to read the API of the device from the library file and return a quantity of physical channels of the device to the APP. The channel type reading submodule is adapted to read the API of the device from the library file and return a type (a CAN channel, a LIN channel, an Ethernet channel, or the like) of a specific channel of the device to the APP. The channel baud rate reading submodule is adapted to read the API of the device from the library file and return a baud rate of the specific channel to the APP. The channel baud rate writing submodule is adapted to call the API of the device from the library file and write a given baud rate of the APP into the device. The connection submodule is adapted to call the API of the device from the library file to connect the APP and the device. The message sending submodule is adapted to call the API of the device from the library file and write a given to-be-sent message of the APP into the device. The message receiving submodule is adapted to call the API of the device from the library file and return messages read by the device from all channels to the APP. The disconnection submodule is adapted to call the API of the device from the library file to disconnect the APP from the device.

### Embodiment 2

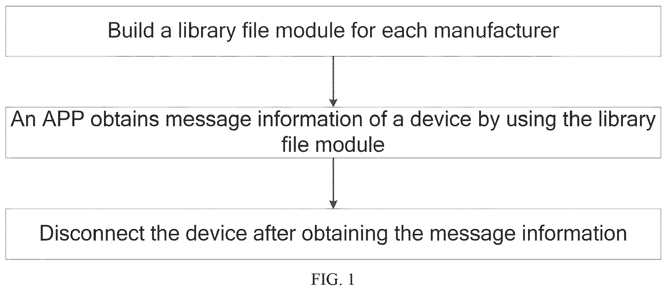

FIG. 1 is a flowchart of a calling method for multi-adapter compatibility according to the present disclosure.

As shown in FIG. 1, based on Embodiment 1, Embodiment 2 provides a calling method for multi-adapter compatibility. In the calling method for multi-adapter compatibility, a library file module is built for each manufacturer; an APP obtains message information of a device by using the library file module; and the device is disconnected after the message information is obtained. An upper-layer software design process for a multi-adapter (a process of executing the calling method for multi-adapter compatibility) is hardware independent. In the design process, a software platform that is universally applicable to all adapters without knowing existence of any one manufacturer in advance, and even support for the device can be independently completed by the manufacturer. With definite and flexible interfaces, an upper-layer software architecture built using the calling method for multi-adapter compatibility has can call different types of automobile adapters by loading library files (library file modules), and can also support new automobile adapters. The APP does not need to be modified in the entire process, thereby expanding a connection capability of the APP as the software platform and unifying compatibility methods in the field of automobile adapters.

In this embodiment, the library file module may be the library file module in Embodiment 1. The library file module corresponding to the manufacture is built.

In this embodiment, the calling method for multi-adapter compatibility is to compile an interface program from bottom to top based on a characteristic of an API of the device, such that the interface program implements an interface function required by an upper layer of multi-adapter software, and ultimately is loaded in the multi-adapter software to run. The bottom-up method makes the upper-layer software independent of hardware, and the upper-layer software does not need to be modified after being developed, thereby achieving software platformization. In this way, a new adapter produced by a new manufacturer can continuously be added to the same software platform.

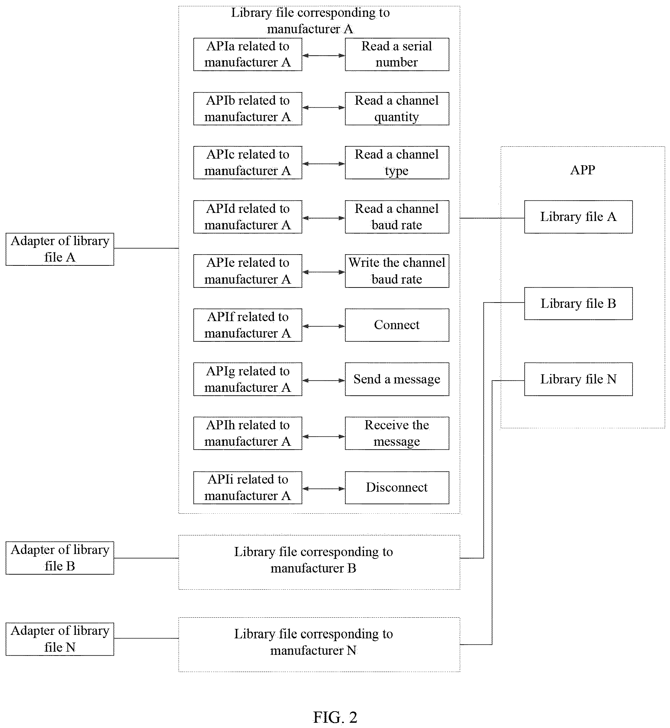

FIG. 2 is a schematic diagram of a calling method for multi-adapter compatibility according to the present disclosure.

In this embodiment, a method for constructing the library file module for each manufacturer includes: the library file module may include but is not limited to: a serial number reading submodule, a channel quantity reading submodule, a channel type reading submodule, a channel baud rate reading submodule, a channel baud rate writing submodule, a connection submodule, a message sending submodule, a message receiving submodule, and a disconnection submodule. The serial number reading submodule is adapted to read the API of the device from a library file and return a serial number of the device to the APP. The channel quantity reading submodule is adapted to read the API of the device from the library file and return a quantity of physical channels of the device to the APP. The channel type reading submodule is adapted to read the API of the device from the library file and return a type of a specific channel of the device to the APP. The channel baud rate reading submodule is adapted to read the API of the device from the library file and return a baud rate of the specific channel to the APP. The channel baud rate writing submodule is adapted to call the API of the device from the library file and write a given baud rate of the APP into the device. The connection submodule is adapted to call the API of the device from the library file to connect the APP and the device. The message sending submodule is adapted to call the API of the device from the library file and write a given to-be-sent message of the APP into the device. The message receiving submodule is adapted to call the API of the device from the library file and return messages read by the device from all channels to the APP. The disconnection submodule is adapted to call the API of the device from the library file to disconnect the APP from the device. As shown in FIG. 2, library file A is taken as an example. The library file A internally contains submodules corresponding to various API calling algorithms of manufacturer A on the left and a submodule corresponding to a function of a callback function of the APP on the right, which serves as an API used by a device of an external manufacturer to interface with the APP.

As shown in FIG. 2, in this embodiment, a method used by the APP to obtain the message formation by using the library file module includes: the APP obtains the message information of the device by using the library file module corresponding to the manufacture, specifically, sequentially implements functions of the serial number reading submodule, the channel quantity reading submodule, the channel type reading submodule, the channel baud rate reading submodule, the channel baud rate writing submodule, the connection submodule, the message sending submodule, the message receiving submodule, and the disconnection submodule to obtain the message information.

In this embodiment, a method for disconnecting the device after obtaining the message information includes: the disconnection submodule disconnects the APP from the device after the message information is obtained.

### Embodiment 3

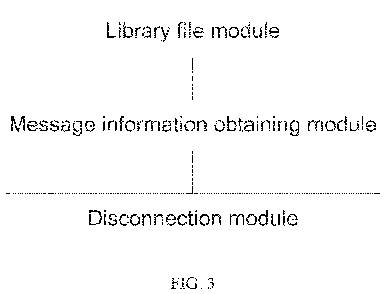

FIG. 3 is a functional block diagram of a calling system for multi-adapter compatibility according to the present disclosure.

As shown in FIG. 3, based on Embodiment 2, Embodiment 3 provides a calling system for multi-adapter compatibility. The calling system for multi-adapter compatibility includes: a library file module configured to build a library file module for each manufacturer; a message information obtaining module configured to obtain, by an APP, message information of a device by using the library file module; and a disconnection module configured to disconnect the device after the message information is obtained.

In this embodiment, functions of the modules have been described in detail in Embodiment 2, and details are not described again in this embodiment.

### Embodiment 4

Based on Embodiment 3, Embodiment 4 provides a multi-adapter compatibility device, including a control module, and a plurality of interface modules electrically connected to the control module. The interface modules are adapted to connect an adapter; and the control module is adapted to receive, by using the adapter, message information sent by a device.

In this embodiment, the control module can integrate functions of various modules in the calling system for multi-adapter compatibility, and call, based on an APP, various API calling algorithms of a corresponding manufacturer and a function of a callback function of the APP.

### Embodiment 5

Based on Embodiment 4, Embodiment 5 provides a multi-adapter compatibility system, including a multi-adapter compatibility device and a host computer. The host computer is adapted to receive message information sent by the multi-adapter compatibility device and analyze the message information.

In this embodiment, the multi-adapter compatibility device may be the multi-adapter compatibility device in Embodiment 4. By using the multi-adapter compatibility device based on a function and a requirement of an APP, the host computer can obtain message information sent by a device, and analyze and process the message.

To sum up, according to the present disclosure, a library file module is built for each manufacturer; an APP obtains message information of a device by using the library file module; and the device is disconnected after the message information is obtained. This implements abstraction of an adapter in an upper-layer APP. The upper-layer APP exports a set of generic APIs, compiles a library file for an adapter of each manufacturer, and implements an API of the upper-layer APP by calling an API of the adapter of the manufacturer. The APP does not need to know any details of the adapter of the manufacturer, but only loads the library file to use a function of the adapter, so as to support adapters of all manufacturers on the market and support any new adapter of the manufacturers by adding a corresponding library file. This greatly improves development efficiency of the APP.

In several embodiments provided in the present disclosure, it should be understood that the disclosed device and method may be implemented in other manners. The device embodiments described above are merely examples. For example, the flowcharts and block diagrams in the accompanying drawings show the possible implementation architecture, functions, and operations of the devices, methods, and computer program products according to multiple embodiments of the present disclosure. Each block in the flowcharts or block diagrams may represent a module, a program segment, or a part of code, and the module, the program segment, or the part of code contains one or more executable instructions used to implement specified logical functions. It should also be noted that, in some alternative implementations, the functions marked in the blocks may alternatively occur in a different order from that marked in the drawings. For example, two consecutive blocks can actually be executed in parallel, or sometimes can be executed in the reverse order, depending on the functions involved. It should also be noted that each block in the flowcharts and/or block diagrams and combinations of the blocks in the flowcharts and/or block diagrams may be implemented by a dedicated hardware-based system for executing specified functions or operations, or may be implemented by a combination of dedicated hardware and computer instructions.

In addition, all functional modules in the embodiments of the present disclosure may be integrated into one independent part, or each of the modules may exist alone physically, or two or more modules may be integrated into one independent part.

The functions, if implemented in the form of a software functional module and sold or used as a stand-alone product, may be stored in a computer-readable storage medium. Based on such understanding, the technical solutions of the present disclosure essentially or the part contributing to the prior art may be implemented in a form of a software product. The computer software product may be stored in a storage medium, and includes several instructions for enabling a computer device (which may be a personal computer, a server, a network device, or the like) to perform all or some steps of the methods described in the embodiments of the present disclosure. The foregoing storage medium includes any medium that can store a program code, such as a universal serial bus (USB) flash disk, a mobile hard disk, a read-only memory (ROM), a random access memory (RAM), a magnetic disk, or an optical disk.

Under the inspiration of the above ideal examples of the present disclosure, a skilled person can absolutely make various changes and modifications through the above description content without departing from the scope of the technical idea of the present disclosure. The technical scope of the present disclosure is not limited to the content of the description, which must be determined according to the scope of the claims.

## Claims

1. A library file module for multi-adapter compatibility, comprising:
a serial number reading submodule, a channel quantity reading submodule, a channel type reading submodule, a channel baud rate reading submodule, a channel baud rate writing submodule, a connection submodule, a message sending submodule, a message receiving submodule, and a disconnection submodule.

2. The library file module for multi-adapter compatibility according to claim 1, wherein
the serial number reading submodule is adapted to read an application programming interface (API) of a device from a library file and return a serial number of the device to an application (APP);
the channel quantity reading submodule is adapted to read the API of the device from the library file and return a quantity of physical channels of the device to the APP;
the channel type reading submodule is adapted to read the API of the device from the library file and return a type of a specific channel of the device to the APP;
the channel baud rate reading submodule is adapted to read the API of the device from the library file and return a baud rate of the specific channel to the APP;
the channel baud rate writing submodule is adapted to call the API of the device from the library file and write a given baud rate of the APP into the device;
the connection submodule is adapted to call the API of the device from the library file to connect the APP and the device;
the message sending submodule is adapted to call the API of the device from the library file and write a given to-be-sent message of the APP into the device;
the message receiving submodule is adapted to call the API of the device from the library file and return messages read by the device from all channels to the APP; and
the disconnection submodule is adapted to call the API of the device from the library file to disconnect the APP from the device.

3. A calling method for multi-adapter compatibility, comprising:
building a library file module for each manufacturer;
obtaining, by an APP, message information of a device by using the library file module; and
disconnecting the device after obtaining the message information.

4. The calling method for multi-adapter compatibility according to claim 3, wherein
the method for building the library file module for each manufacturer comprises:
the library file module comprises: a serial number reading submodule, a channel quantity reading submodule, a channel type reading submodule, a channel baud rate reading submodule, a channel baud rate writing submodule, a connection submodule, a message sending submodule, a message receiving submodule, and a disconnection submodule, wherein
the serial number reading submodule is adapted to read an API of the device from a library file and return a serial number of the device to the APP;
the channel quantity reading submodule is adapted to read the API of the device from the library file and return a quantity of physical channels of the device to the APP;
the channel type reading submodule is adapted to read the API of the device from the library file and return a type of a specific channel of the device to the APP;
the channel baud rate reading submodule is adapted to read the API of the device from the library file and return a baud rate of the specific channel to the APP;
the channel baud rate writing submodule is adapted to call the API of the device from the library file and write a given baud rate of the APP into the device;
the connection submodule is adapted to call the API of the device from the library file to connect the APP and the device;
the message sending submodule is adapted to call the API of the device from the library file and write a given to-be-sent message of the APP into the device;
the message receiving submodule is adapted to call the API of the device from the library file and return messages read by the device from all channels to the APP; and
the disconnection submodule is adapted to call the API of the device from the library file to disconnect the APP from the device.

5. The calling method for multi-adapter compatibility according to claim 4, wherein
a method used by the APP to obtain the message information of the device by using the library file module comprises:
obtaining, by the APP, the message information of the device by using the library file module corresponding to the manufacturer, specifically,
sequentially implementing functions of the serial number reading submodule, the channel quantity reading submodule, the channel type reading submodule, the channel baud rate reading submodule, the channel baud rate writing submodule, the connection submodule, the message sending submodule, the message receiving submodule, and the disconnection submodule to obtain the message information.

6. The calling method for multi-adapter compatibility according to claim 5, wherein
a method for disconnecting the device after obtaining the message information comprises:
disconnecting the APP from the device by using the disconnection submodule after obtaining the message information.

7. A calling system for multi-adapter compatibility, comprising:
a library file module configured to build a library file module for each manufacturer;
a message information obtaining module configured to obtain, by an APP, message information of a device by using the library file module; and
a disconnection module configured to disconnect the device after the message information is obtained.

8. A multi-adapter compatibility device, comprising:
a control module, and a plurality of interface modules electrically connected to the control module, wherein
the interface modules are adapted to connect an adapter; and
the control module is adapted to receive, by using the adapter, message information sent by a device.

9. A multi-adapter compatibility system, comprising:
a multi-adapter compatibility device and a host computer, wherein
the host computer is adapted to receive message information sent by the multi-adapter compatibility device and analyze the message information.
